# EUROPEAN PATENT APPLICATION

(11) **EP 3 648 054 A1**
(43) Date of publication of application: **06.05.2020**
(21) Application number: 18823286.2
(22) Date of filing: 04.06.2018
(51) Int. Cl.: G06T 7/00, G06T 1/00

(54) **IDIOSYNCRASY SENSING SYSTEM AND IDIOSYNCRASY SENSING METHOD**

(30) Priority: 29.06.2017 JP 2017127307
(71) Applicant: Sumitomo Chemical Company Limited, Tokyo 104-8260 (JP)
(72) Inventor: OZAKI Maya, Niihama-shi Ehime 792-8521 (JP); SUZUKI Takashi, Niihama-shi Ehime 792-8521 (JP)
(74) Representative: J A Kemp LLP
(86) International application number: PCT/JP2018/021407
(87) International publication number: WO 2019/003813

(57) **Abstract**

In a singular part detection system (1), a singular part (13) having an arbitrary feature is extracted from a captured image (12) of a subject captured by an imaging unit (2) by a singular part extracting unit (3), a singular part image (17) with an arbitrary size is cut out from the captured image (12) by a singular part image cutting unit (4) such that the singular part (13) overlaps the center (C) of the singular part image (17), and a type of the singular part (13) is identified by an identification unit (5) using machine learning with the singular part image (17) as an input.

## Description

### Technical Field

The invention relates to a singular part detection system and a singular part detection method.

### Background Art

For example, a singular part detection system that detects abnormal features of an optical film such as a polarizing film or a phase-difference film, a laminated film used for a separator of a battery, a coating film used for a gas separation membrane, and the like is known as a defect detection system, an abnormality detection system, or a singular part detection system that detects an abnormal state of a subject or a part having a feature different from that of other parts on the basis of a captured image of the subject. Such a type of singular part detection system conveys a film in a conveyance direction, captures a two-dimensional image of the film at discrete times, and detects a singular part on the basis of the captured two-dimensional image. For example, a system disclosed in Patent Literature 1 divides a two-dimensional image using a plurality of lines which are arrayed in a conveyance direction and generates images divided by lines in which lines at the same positions in the two-dimensional images captured at discrete times are arrayed in a time series. The line-divided images are processed into feature-emphasized images in which variation in luminance is emphasized. Presence or a position of an abnormal feature of the film is easily identified using the feature-emphasized image.

### Citation List

### Patent Literature

Patent Literature 1: Japanese Patent No. 4726983

### Summary of Invention

### Technical Problem

In order to improve the detection accuracy for a part having a feature different from that of other areas (hereinafter referred to as a singular part) including a defect or the like, it is conceivable that identification using machine learning be introduced into a singular part detection system. However, there is a problem in that it is difficult to understand grounds for identification using machine learning from a human viewpoint. In addition, since identification using machine learning requires a large amount of calculation, there is also a disadvantage that the speed for detecting a singular part is likely to decrease due to the required accuracy.

Therefore, an objective of the invention is to provide a singular part detection system and a singular part detection method that can further facilitate understanding of grounds for identification using machine learning and perform identification using machine learning at a higher speed.

### Solution to Problem

According to an aspect of the invention, there is provided a singular part detection system including: an imaging unit that images a subject; a singular part extracting unit that extracts a singular part having an arbitrary feature from a captured image of the subject captured by the imaging unit; a singular part image cutting unit that cuts out a singular part image with an arbitrary size from the captured image such that the singular part extracted by the singular part extracting unit overlaps the center of the singular part image; and an identification unit that identifies a type of the singular part using machine learning with the singular part image cut out by the singular part image cutting unit as an input.

According to this configuration, the singular part extracting unit extracts a singular part having an arbitrary feature from a captured image of a subject captured by the imaging unit, the singular part image cutting unit cuts out a singular part image with an arbitrary size from the captured image such that the singular part extracted by the singular part extracting unit overlaps the center of the singular part image, and the type of the singular part is identified by the identification unit using machine learning with the singular part image cut out by the singular part image cutting unit as an input. Accordingly, by causing the singular part extracting unit to extract the singular part having an arbitrary feature from the captured image of the subject captured by the imaging unit in the previous operation, it is possible to enable initial classification based on human determination and to further facilitate understanding of the grounds for identification using machine learning in the identification unit in the subsequent operation. By causing the singular part image cutting unit to cut out the singular part image from the captured image such that the singular part overlaps the center of the singular part image in the previous operation, it is possible to decrease the size of the singular part image and to perform identification using machine learning in the identification unit in a subsequent stage at a higher speed. Since the singular part image is cut out from the captured image such that the singular part overlaps the center of the singular part image, it is possible to reduce a position shift of the singular part in the singular part image and to improve identification accuracy using machine learning in the identification unit in a subsequent stage.

In this case, the singular part extracting unit may extract the singular part having at least one feature selected from the group consisting of a luminance, a color, a size, and a shape from the captured image.

According to this configuration, since a singular part having at least one feature selected from the group consisting of a luminance, a color, a size, and a shape is extracted from the captured image by the singular part extracting unit, it is possible to facilitate understanding of grounds for identification using machine learning in the identification unit in a subsequent stage.

The identification unit may identify the type of the singular part using a convolutional neural network.

According to this configuration, since the type of the singular part is identified using the convolutional neural network by the identification unit, it is possible to identify a type of a singular part with higher accuracy.

On the other hand, according to another aspect of the invention, there is provided a singular part detection method including: an imaging step of imaging a subject; a singular part extracting step of extracting a singular part having an arbitrary feature from a captured image of the subject captured in the imaging step; a singular part image cutting step of cutting a singular part image with an arbitrary size from the captured image such that the singular part extracted in the singular part extracting step overlaps the center of the singular part image; and an identification step of identifying a type of the singular part using machine learning with the singular part image cut out in the singular part image cutting step as an input.

In this case, the singular part extracting step may include extracting the singular part having at least one feature selected from the group consisting of a luminance, a color, a size, and a shape from the captured image.

The identification step may include identifying the type of the singular part using a convolutional neural network.

### Advantageous Effects of Invention

With the singular part detection system and the singular part detection method according to one aspect and the other aspect of the invention, it is possible to further facilitate understanding of grounds for identification using machine learning and to perform identification using machine learning at a higher speed.

### Brief Description of Drawings

FIG. 1 is a block diagram illustrating a singular part detection system according to a first embodiment.
FIG. 2 is a flowchart illustrating a singular part detection method according to the first embodiment.
FIG. 3 is a diagram illustrating an example of a captured image.
FIGS. 4(A) and 4(B) are diagrams illustrating cut-out singular part images.
FIG. 5 is a diagram illustrating a convolutional neural network.
FIGS. 6(A), 6(B), 6(C), 6(D), 6(E), 6(F), and 6(G) are diagrams illustrating identification of a liquid-liquid interface in an oil-water separation tank by a singular part detection system according to a second embodiment.
FIGS. 7(A), 7(B), and 7(C) are diagrams illustrating identification of emission of smoke from a chimney by a singular part detection system according to a third embodiment.

### Description of Embodiments

Hereinafter, embodiments of a singular part detection system and a singular part detection method according to the invention will be described in detail with reference to the accompanying drawings.

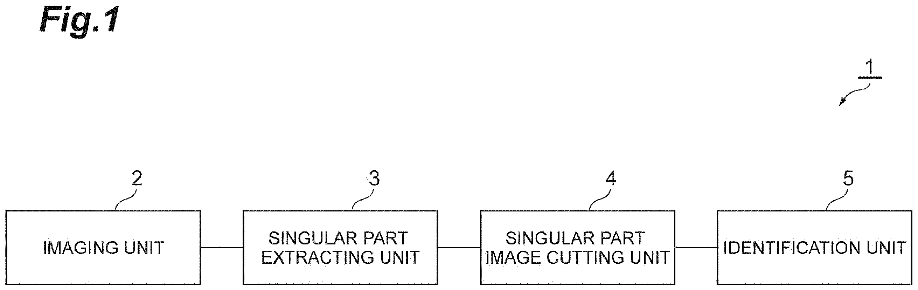

As illustrated in FIG. 1, a singular part detection system 1 according to a first embodiment includes an imaging unit 2, a singular part extracting unit 3, a singular part image cutting unit 4, and an identification unit 5. The singular part detection system 1 according to this embodiment detects an abnormality of a film such as an optical film such as a polarizing film or a phase-difference film, a laminated film used for a separator of a battery, or the like. The imaging unit 2 captures an image of a subject using a camera such as a monocular camera or a stereoscopic camera. The imaging unit 2 can capture an image of a subject once or continuously at predetermined frame time intervals.

The singular part extracting unit 3 extracts a singular part having an arbitrary feature from a captured image of a subject captured by the imaging unit 2. As described above, a singular part refers to a part having a feature different from that of most other areas including a defect or the like in a subject. As will be described later, the singular part extracting unit 3 extracts, for example, a singular part having at least one feature selected from the group consisting of a luminance, a color, a size, and a shape from a captured image. Luminance includes brightness, a histogram, a luminance gradient, and sharpness. The color includes a wavelength, a spectrum, chromaticity, and a color difference. The size includes width, height, size, area, and volume. The shape includes Feret's diameter, aspect ratio, shape or direction of edge, moment, roundness, and complexity. In addition to a luminance, a color, a size, and a shape, the singular part extracting unit 3 can extract a singular part having an arbitrary feature which is artificially determined in advance. That is, the singular part extracting unit 3 may extract a singular part using an artificially determined rule-based method in a non-learned stage in which machine learning has not yet been carried out.

The singular part image cutting unit 4 cuts out a singular part image with an arbitrary size from the captured image such that the singular part extracted by the singular part extracting unit 3 overlaps the center of the singular part image. Overlapping of the singular part and the center of the singular part image includes, for example, a case in which the center of the singular part and the center of the singular part image overlap each other and a case in which a certain position on the singular part and the center of the singular part image overlap each other. The arbitrary size is not particularly limited as long it is a size which includes the singular part and with which the singular part can be identified at a high speed, and includes a size including a part of the singular part as well as a size including the whole singular part. The shape of the singular part image is not limited to a square or a rectangle, and may be an arbitrary shape such as a circle or a polygon. The identification unit 5 identifies a type of the singular part using machine learning with the singular part image cut out by the singular part image cutting unit 4 as an input. As will be described later, the identification unit 5 identifies the type of the singular part using a convolutional neural network. A neural network other than a convolutional neural network or other methods can also be used as long as it can identify the type of the singular part using machine learning.

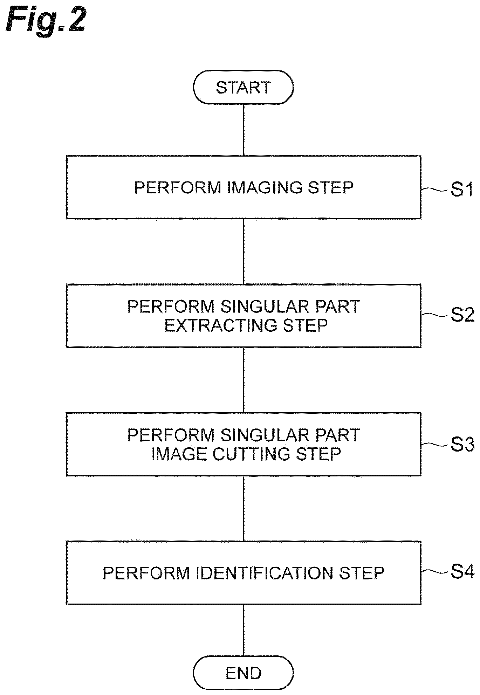

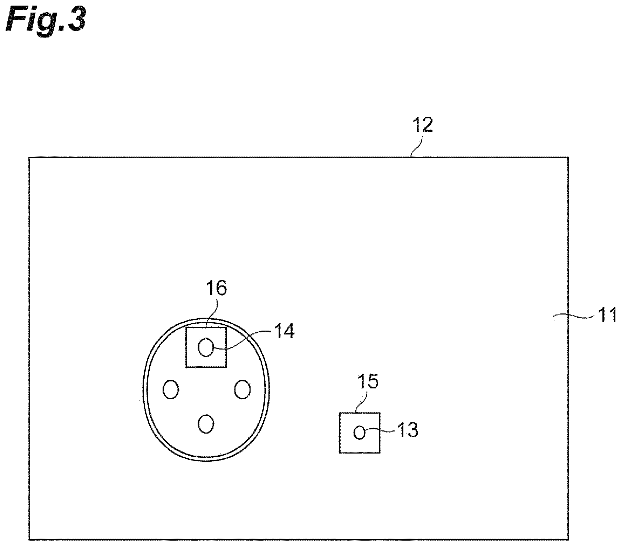

A singular part detection method using the singular part detection system according to this embodiment will be described later. As illustrated in FIG. 2, an imaging step of imaging a subject is performed by the imaging unit 2 of the singular part detection system 1 (S1). In the imaging step, a captured image 12 of a subject 11 which is a film such as an optical film or a laminated film is captured, for example, as illustrated in FIG. 3.

As illustrated in FIG. 2, a singular part extracting step of extracting a singular part having an arbitrary feature from the captured image 12 of the subject 11 captured in the imaging step is performed by the singular part extracting unit 3 of the singular part detection system 1

(S2). In the example illustrated in FIG. 3, a singular part 13 which appears as a small black point and a singular part 14 which appears as a large black point are extracted from the captured image 12 of the subject 11 which is a film. In the singular part extracting step, the singular part extracting unit 3 of the singular part detection system 1 extracts the singular parts 13 and 14 having at least one feature of a luminance, a color, a size, and a shape from the captured image 12. For example, the singular part extracting unit can extract sets of pixels in which the luminance and the size are greater than predetermined threshold values in the captured image 12 as the singular parts 13 and 14.

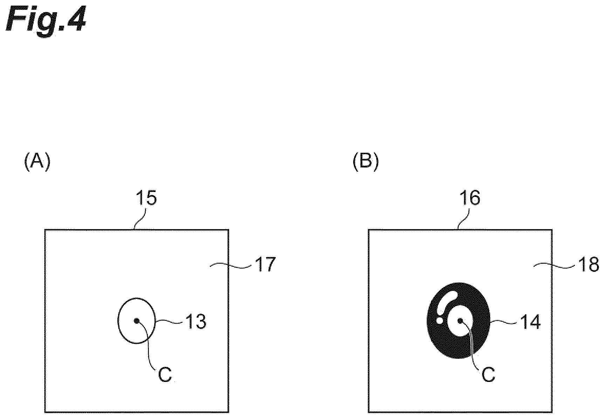

As illustrated in FIG. 2, a singular part image cutting step of cutting singular part images with an arbitrary size from the captured image 12 such that the singular parts 13 and 14 extracted in the singular part extracting step overlap the centers of the singular part images is performed by the singular part image cutting unit 4 of the singular part detection system 1 (S3). In the examples illustrated in FIGS. 3, 4(A), and 4(B), singular part images 17 and 18 of the singular parts 13 and 14 are cut out using square cutting frames 15 and 16 with an arbitrary size (the number of pixels) in the horizontal direction and the vertical direction. In the examples illustrated in FIGS. 4(A) and 4(B), the centers of the singular parts 13 and 14 coincide with the centers C of the singular part images 17 and 18, but any one portion of the singular parts 13 and 14 may overlap the centers C of the singular part images 17 and 18 as described above.

As illustrated in FIG. 2, an identification step of identifying types of the singular parts 13 and 14 using machine learning with the singular part images 17 and 18 cut out in the singular part image cutting step as an input is performed by the identification unit 5 of the singular part detection system 1 (S4). In the identification step, the identification unit 5 of the singular part detection system 1 identifies the types of the singular parts 13 and 14 using a convolutional neural network.

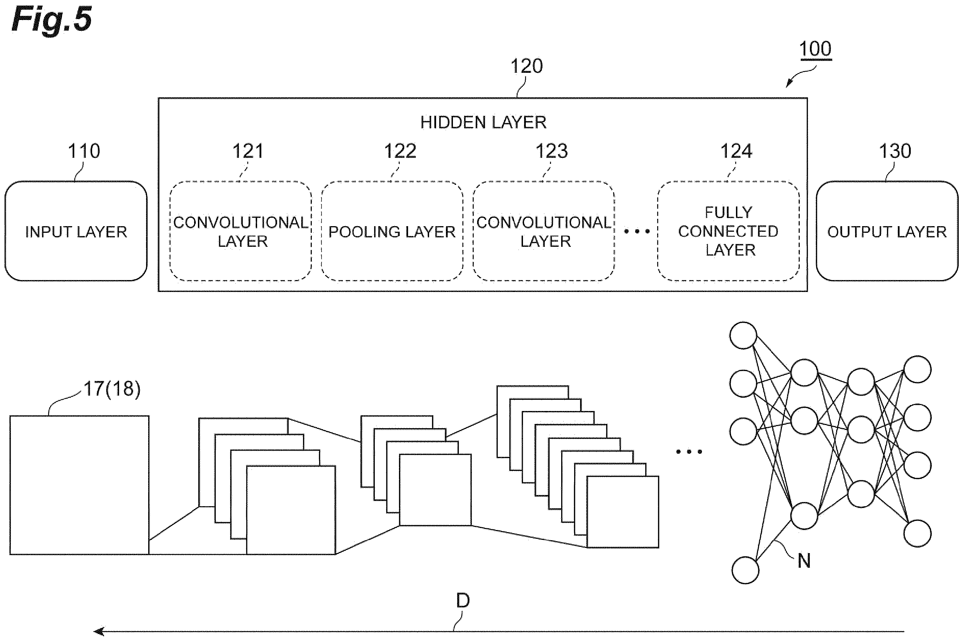

As illustrated in FIG. 5, a convolutional neural network 100 includes an input layer 110, a hidden layer 120, and an output layer 130. The singular part images 17 and 18 cut out in the singular part image cutting step are input to the input layer 110 by the identification unit 5 of the singular part detection system 1. The hidden layer 120 includes convolutional layers 121 and 123 in which image processing using a weighting filter is performed, a pooling layer 122 in which a process of reducing a two-dimensional array output from the convolutional layers 121 and 123 longitudinally and laterally and leaving an effective value is performed, and a fully connected layer 124 in which weighting factors N of the layers are updated.

The result of identification of the types of the singular parts 13 and 14 using machine learning is output from the output layer 130. In the convolutional neural network 100, weightings of the layers are learned by causing an error between the output result and a correct answer value to inversely propagate in a reverse direction D. In the examples illustrated in FIGS. 3, 4(A), and 4(B), the type of the singular part 13 is identified as a "bubble" and is identified as a truly defective article through the identification step by the identification unit 5 of the singular part detection system 1. On the other hand, the type of the singular part 14 is identified as "ink" and is identified as a truly non-defective article.

In this embodiment, in the singular part detection system 1, the singular part extracting unit 3 extracts the singular parts 13 and 14 having an arbitrary feature from the captured image 12 of the subject 11 captured by the imaging unit 2, the singular part image cutting unit 4 cuts out the singular part images 17 and 18 with an arbitrary size from the captured image 12 such that the singular parts 13 and 14 extracted by the singular part extracting unit 3 overlap the centers C of the singular part images 17 and 18, and the identification unit 5 identifies the types of the singular parts 13 and 14 using machine learning with the singular part images 17 and 18 cut out by the singular part image cutting unit 4 as an input. By causing the singular part extracting unit 3 to extract the singular parts 13 and 14 having an arbitrary feature from the captured image 12 of the subject 11 captured by the imaging unit 2 in the previous operation, it is possible to enable initial classification based on human determination and to further facilitate understanding of the grounds for identification using machine learning in the identification unit 5 in the subsequent operation. By causing the singular part image cutting unit 4 to cut out the singular part images 17 and 18 from the captured image 12 such that the singular parts 13 and 14 overlap the centers of the singular part images 17 and 18 in the previous operation, it is possible to decrease the sizes of the singular part images 17 and 18 and to perform identification using machine learning in the identification unit 5 in a subsequent stage at a higher speed. Since the singular part images 17 and 18 are cut out from the captured image 12 such that singular parts 13 and 14 overlap the centers of the singular part images, it is possible to reduce a position shift of the singular parts 13 and 14 in the singular part images 17 and 18 and to improve identification accuracy using machine learning in the identification unit 5 in a subsequent stage.

According to this embodiment, since the singular parts 13 and 14 having at least one feature selected from the group consisting of a luminance, a color, a size, and a shape are extracted from the captured image 12 by the singular part extracting unit 3, it is possible to facilitate understanding of the grounds for identification using machine learning in the identification unit 5 in the subsequent stage.

According to this embodiment, since the identification unit 5 identifies the types of the singular parts 13 and 14 using the convolutional neural network, it is possible to identify the types of the singular parts 13 and 14 with higher accuracy.

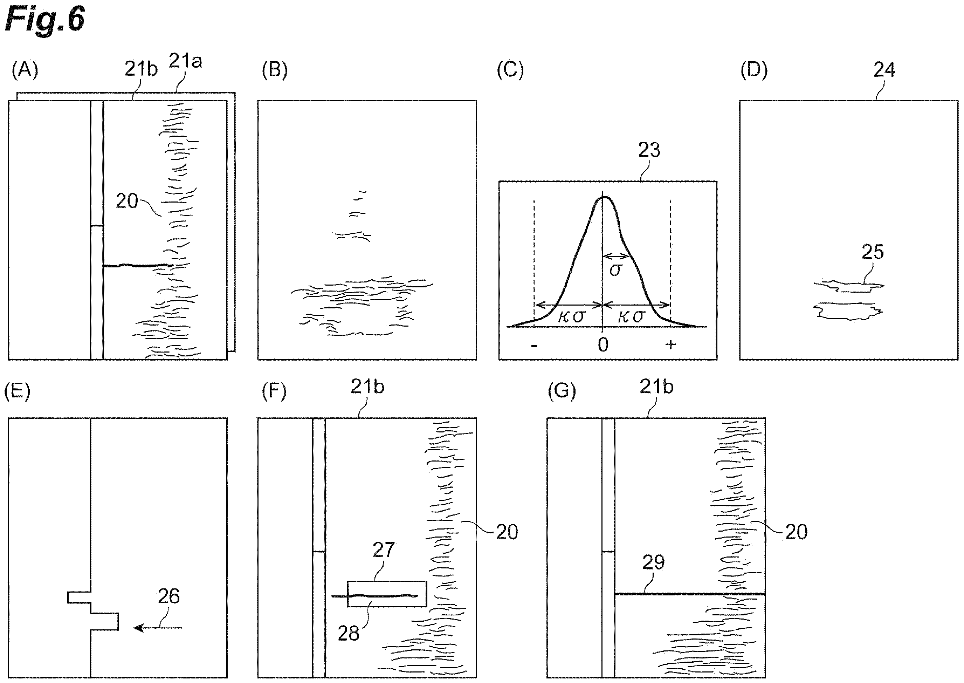

A second embodiment of the invention will be described below. In this embodiment, the singular part detection system 1 detects a liquid-liquid interface of an oil-water separation tank and recognizes an abnormality of the liquid-liquid interface as a defect. As illustrated in FIG. 6(A), a captured image 21a of a subject 20 which is an oil-water separation tank one frame ago and a captured image 21b of the captured image 21a one frame after are captured as a plurality of frames by the imaging unit 2. As illustrated in FIG. 6(B), an inter-frame difference extraction image 22 which is a difference between the captured images 21a and 21b in the plurality of frames is extracted by the singular part extracting unit 3.

As illustrated in FIGS. 6(C) and 6(D), for example, pixels having luminance values equal to and greater than a threshold value±kσ with a standard deviation σ are extracted as singular part positions 25 in a singular part position extraction image 24 using a histogram 23 of the inter-frame difference extraction image 22 by the singular part extracting unit 3 (where k is an arbitrary coefficient). As illustrated in FIG. 6(E), an estimated interface position 26 is estimated on the basis of the singular part position extraction image 24 by the singular part extracting unit 3. As illustrated in FIG. 6(F), a singular part image of a singular part 28 in the captured image 21b is cut out using a cutting frame 27 by the singular part image cutting unit 4. As illustrated in FIG. 6(G), similarly to the first embodiment, a liquid-liquid interface 29 which is the type of the singular part 28 is identified using machine learning with the singular part image cut out by the singular part image cutting unit 4 as an input by the identification unit 5. In this way, in this embodiment, it is possible to detect a liquid-liquid interface of an oil-water separation tank using luminance as a feature and to recognize an abnormal state of the liquid-liquid interface as a singular part.

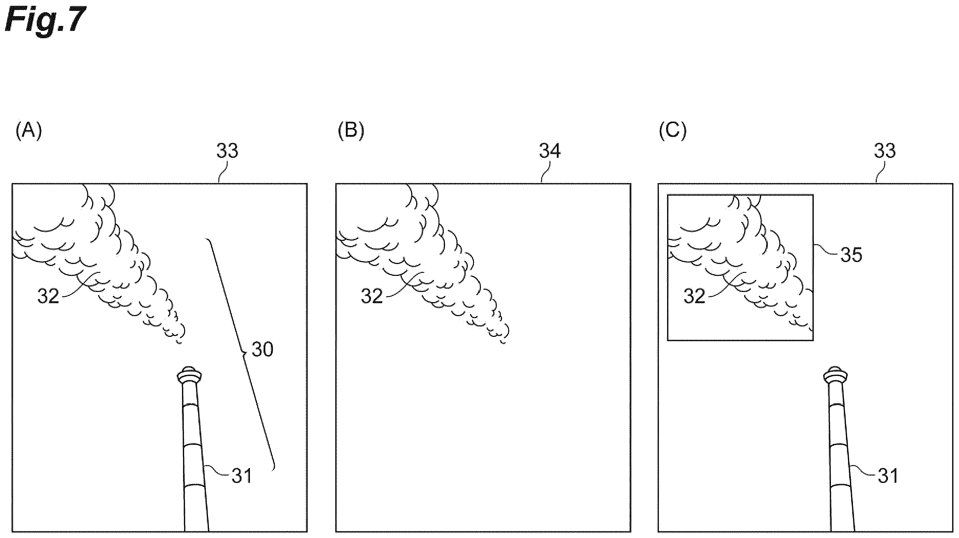

A third embodiment of the invention will be described below. In this embodiment, the singular part detection system 1 detects emission of smoke from a chimney and recognizes an abnormality of emission of smoke as a singular part. As illustrated in FIG. 7(A), a captured image 33 of a subject 30 which includes a chimney 31 and emission of smoke 32 is captured in a plurality of frames by the imaging unit 2. As illustrated in FIG. 7(B), an inter-frame difference extraction image 34 which is a difference between the plurality of frames of the captured image 33 is extracted by the singular part extracting unit 3. As illustrated in FIG. 7(C), a part of which the shape is smoke is extracted as a singular part using a Mahalanobis Taguchi (MT) method by the singular part extracting unit 3, and a singular part image of the emission of smoke 32 which is the singular part in the captured image 33 is cut out using a cutting frame 35 by the singular part image cutting unit 4. The processes subsequent thereto are the same as in the first embodiment. In this way, in this embodiment it is possible to detect emission of smoke from a chimney using a shape as a feature and to recognize an abnormal state of the emission of smoke as a singular part.

While embodiments of the invention have been described above, the invention is not limited to the embodiments and can be embodied in various forms. For example, the singular part detection system 1 and the singular part detection method according to the embodiments can be applied for inspection of an amount of liquid filled into a container in a production line. With the singular part detection system 1 and the singular part detection method according to the embodiments, it is possible to detect which position in the container liquid reaches using a vector obtained by projecting luminance values of pixels in an image to a feature space as a feature.

The singular part detection system 1 and the singular part detection method according to the embodiments can be applied for inspection of an appearance such as cracks or scratches of a glass product or the like in a production line. When illumination light is focused on a glass product to image the glass product, a singular part can be extracted using the fact that the luminance thereof becomes higher than that of other parts when an abnormality occurs in a part of the captured image. That is, according to the embodiments, it is possible to recognize an abnormality of a glass product as a singular part using a difference between luminance values acquired from background differences as a feature.

The singular part detection system 1 and the singular part detection method according to the embodiments can be applied for management of entrance and abnormal behavior of an abnormal person in a factory. With the singular part detection system 1 and the singular part detection method according to the embodiments, it is possible to detect a defect of crops or the like in a wide area using a luminance value in an image as a feature by mounting the imaging unit 2 in a manned aircraft, an unmanned aircraft, and a drone, connecting the imaging unit 2 to the singular part extracting unit 3 by wireless communication, causing the drone or the like having the imaging unit 2 mounted therein to fly over a farm and to image the farm. With the singular part detection system 1 and the singular part detection method according to the embodiments, it is possible to detect an abnormal state of factory facilities using a luminance value in an image as a feature and to remotely perform checking of the factory facilities or the like, by mounting the imaging unit 2 in a manned aircraft, an unmanned aircraft, and a drone, connecting the imaging unit 2 to the singular part extracting unit 3 by wireless communication, causing the drone or the like having the imaging unit 2 mounted therein to fly in a factory and to image facilities in the factory.

The singular part detection system and the singular part detection method according to the embodiments can be applied to inspection of a defect such as deformation of a membrane surface or presence of bubbles in the process of manufacturing a gas separation membrane. When illumination light is focused on a separation membrane and the separation membrane is imaged, it is possible to extract a singular part using the fact that luminance is lower or higher than that of other parts when an abnormality occurs in a part in the captured image. That is, in this embodiment, it is possible to recognize an abnormality of a separation membrane as a singular part using a difference between luminance values as a feature. A separation membrane having no abnormality can be manufactured by removing the detected singular part from the separation membrane. By cutting the separation membrane having no abnormality in a desired size and forming an adhesive layer on the cut-out separation membrane, a separation membrane sheet having no abnormality can be obtained. By stacking the membrane sheet having no abnormality and a desired layer, a separation membrane element can be manufactured. In this way, by employing the singular part detection system and the singular part detection method according to the embodiments, it is possible to realize manufacturing of a high-quality separation membrane element without any defect.

### Reference Signs List

- 1: Singular part detection system
- 2: Imaging unit
- 3: Singular part extracting unit
- 4: Singular part image cutting unit
- 5: Identification unit
- 11: Subject
- 12: Captured image
- 13, 14: Singular part
- 15, 16: Cutting frame
- 17, 18: Singular part image
- 20: Subject
- 21a, 21b: Captured image
- 22: Inter-frame difference extraction image
- 23: Histogram
- 24: Singular part position extraction image
- 25: Singular part position
- 26: Estimated interface position
- 27: Cutting frame
- 28: Singular part
- 29: Liquid-liquid interface
- 30: Subject
- 31: Chimney
- 32: Emission of smoke
- 33: Captured image
- 34: Inter-frame difference extraction image
- 35: Cutting frame
- 100: Convolutional neural network
- 110: Input layer
- 120: Hidden layer
- 121, 123: Convolutional layer
- 122: Pooling layer
- 124: Fully connected layer
- 130: Output layer
- C: Center
- N: Weighting factor
- D: Reverse direction

## Claims

1. A singular part detection system comprising:
an imaging unit that images a subject;
a singular part extracting unit that extracts a singular part having an arbitrary feature from a captured image of the subject captured by the imaging unit;
a singular part image cutting unit that cuts out a singular part image with an arbitrary size from the captured image such that the singular part extracted by the singular part extracting unit overlaps the center of the singular part image; and
an identification unit that identifies a type of the singular part using machine learning with the singular part image cut out by the singular part image cutting unit as an input.

2. The singular part detection system according to claim 1, wherein the singular part extracting unit extracts the singular part having at least one feature selected from the group consisting of a luminance, a color, a size, and a shape from the captured image.

3. The singular part detection system according to claim 1 or 2, wherein the identification unit identifies the type of the singular part using a convolutional neural network.

4. A singular part detection method comprising:
an imaging step of imaging a subject;
a singular part extracting step of extracting a singular part having an arbitrary feature from a captured image of the subject captured in the imaging step;
a singular part image cutting step of cutting a singular part image with an arbitrary size from the captured image such that the singular part extracted in the singular part extracting step overlaps the center of the singular part image; and
an identification step of identifying a type of the singular part using machine learning with the singular part image cut out in the singular part image cutting step as an input.

5. The singular part detection method according to claim 4, wherein the singular part extracting step includes extracting the singular part having at least one feature selected from the group consisting of a luminance, a color, a size, and a shape from the captured image.

6. The singular part detection method according to claim 4 or 5, wherein the identification step includes identifying the type of the singular part using a convolutional neural network.
